# EUROPÄISCHE PATENTSCHRIFT

(11) **EP 0 531 844 B1**
(45) Veröffentlichungstag und Bekanntmachung des Hinweises auf die Patenterteilung: **27.12.1996**
(21) Anmeldenummer: 92114834.2
(22) Anmeldetag: 31.08.1992
(51) Int. Cl.: C08G 18/00, C08G 59/68

(54) **Wärmehärtbare Reaktionsharzgemische, ein Verfahren zu ihrer Herstellung und die Verwendung zur Herstellung von Press-Massen und Formkörpern**
Thermosetting reactive resin mixtures, method for their preparation and their use for preparing press masses and molded articles
Mélanges de résines réactives thermodurcissables, procédé de leur préparation et leur utilisation dans la préparation de masses de pressage et d'objets formés

(30) Priorität: 12.09.1991 DE 4130329
(43) Veröffentlichungstag der Anmeldung: 17.03.1993
(73) Patentinhaber: BAYER AG, 51368 Leverkusen (DE)
(72) Erfinder: Jakob, Hans-Dieter, W-5090 Leverkusen 3 (DE); Franke, Joachim, Dr., Miles Inc., Pittsburgh, PA 15205 (US); Müller, Hanns-Peter, Dr., W-5068 Odentahl (DE); Schrader, Lutz, Dr., W-4150 Krefeld (DE)

(56) Entgegenhaltungen:
- EP-A- 0 272 563
- DE-A- 3 600 764
- DE-B- 2 655 367

## Beschreibung

Die vorliegende Erfindung betrifft, durch Wärmeeinwirkung zu Isocyanurat- und Oxazolidinongruppen aufweisenden Kunststoffen aushärtbare, Reaktionsharzgemische aus organischen Polyisocyanaten, organischen Polyepoxiden und speziellen Katalysatoren sowie gegebenenfalls weiteren Hilfs- und Zusatzmitteln.

Isocyanurat- und Oxazolidinongruppen aufweisende Kunststoffe sind bekannt. Sie werden hergestellt durch Polyaddition von polyfunktionellen 1,2-Epoxiden mit Polyisocyanaten und Verwendung von Härtungskatalysatoren (DE-OS 33 23 153, EP 0 130 454, DE-OS 33 23 084, DE-OS 33 23 123). Hierfür geeignet sind z.B. tert. Amine und Imidazole, ferner Oniumsalze und Lewis-Salze.

In der DE-A 3600764 werden wärmehärtbare Zusammensetzungen beschrieben, die ein organisches Polyisocyanat, ein Polyepoxid und einen latenten Katalysator enthalten. Bei dem latenten Katalysator handelt es sich um tertiäre oder quartäre Amoniumsalze von alkylierend wirkenden sauren Estern von organischen Phosphonsäuren oder der Phosphorsäure. Tertiäre Amine können diesen Zusammensetzungen zugesetzt werden.

DE-OS 39 04 156 beschreibt die Polyaddition dieser Massen mit tertiären Aminen bei Raumtemperatur, die zu bereits formstabilen Kunststoffen führt. Diese Massen sind z.B. in MEK schlecht löslich und nicht mehr schmelzbar, ein Zeichen dafür, daß die Reaktion über den sogenannten B-Zustand hinaus abgelaufen ist.

Für viele technische Anwendungsgebiete ist aber gerade dieser B-Zustand erwünscht, in dem die Masse ein noch hinreichend reaktiver Feststoff ist, der mahlbar, schmelzbar und löslich, ein breites Anwendungsgebiet abdeckt.

Aufgabe der vorliegenden Erfindung war es, aus den flüssigen Ausgangsverbindungen in technisch einfacher Weise ein Festharz im B-Zustand in lagerstabiler Form herzustellen.

In DE-OS 33 23 123 wird beschrieben, daß dieser B-Zustand dadurch erreicht wird, daß die katalysierte Polyaddition in der Warme eingeleitet wird. Diese Polyaddition wird bei Erreichen des B-Zustandes durch Zugabe eines Katalysatorgiftes abgebrochen.

Es wurde nun überraschend gefunden, daß diese Reaktion unter Zugabe der in DE-OS 39 04 156 beschriebenen Katalysatoren in geringer Menge bei Raumtemperatur verläuft und im B-Zustand verharrt, ohne daß ein Katalysatorgift zugesetzt werden muß.

Es ist somit möglich, Reaktionsharzgemische auf Basis von organischen Polyisocyanaten und organischen Polyepoxiden zur Verfügung zu stellen, die in der Hitze zu hochwertigen, Isocyanurat- und Oxazolidinongruppen aufweisenden Kunststoffen ausgehärtet werden können, die bei Raumtemperatur weitgehend lagerstabil sind, ohne daß deren Härtung zu einem beliebigen Zeitpunkt unterbrochen werden muß, so daß die Systeme in einem intermediären "B-Zustand", d.h. in einem bei Raumtemperatur oder mäßig erhöhter Temperatur festen, jedoch noch schmelzbaren Zustand vorliegen, so daß sie zu jedem beliebigen späteren Zeitpunkt beispielsweise nach Pulverisierung oder Auflösen in einem geeigneten Lösungsmittel unter Formgebung und weiterer Wärmeeinwirkung in den endgültigen, vernetzten und nicht mehr schmelzbaren Endzustand überführt werden können.

Diese Aufgabe konnte durch die Bereitstellung der nachstehend näher beschriebenen erfindungsgemäßen Reaktionsharzgemische gelöst werden, die durch das Vorliegen einer Kombination von nicht latenten und von ganz bestimmten latenten Katalysatoren gekennzeichnet sind.

Gegenstand der Erfindung sind somit wärmehärtbare, bei Raumtemperatur feste Reaktionsharze erhältlich aus
a) mindestens einem organischem Polyisocyanat
b) mindestens einer, mindestens zwei Epoxidgruppen aufweisenden organischen Verbindung solchen Menge, die einem Äquivalentverhältnis von Isocyanatgruppen zu Epoxidgruppen von 1, 2:1 bis 70:1 entspricht
c) einem Katalysatorgemisch aus c₁, einem nicht latenten, und c₂, einem latenten Katalysator
d) weiteren Hilfs- und Zusatzmittel
dadurch gekennzeichnet, daß der nicht latente Katalysator ein tertiäres Amin ist und es sich bei dem latenten Katalysator um tertiäre oder quartäre Ammoniumsalze von alkylierend wirkenden sauren Estern der organischen Phosphon- oder der Phosphorsäure oder Bortrichlorid-tertiär Amin-Komplexe handelt, wobei das Verhältnis von latentem Katalysator zu nicht latentem Katalysator 1:0,4 - 0,6 beträgt und der nicht latente Katalysator in einer Menge von 0.1 - 1 Gew%, bezogen auf Gesamtgewicht, eingesetzt wird.

Der Fachmann mußte erwarten, daß eine Kombination der beiden Katalysatoren c₁ und c₂ die Polymerisation über den B-Zustand hinaus ablaufen läßt, so daß keine löslichen, schmelzbaren und mahlbaren Harze entstehen.

Dies ist die Lehre aus DE-OS 39 04 156 in der beschrieben ist, daß die Verwendung von sterisch gehinderten Katalysatoren zu Reaktionsharzen führt, deren Viskositat bei Raumtemperatur sich nicht sofort ändert, die aber dennoch in wirtschaftlich kurzen Zeiten bei Raumtemperatur zu bereits formstabilen Kunststoffen gelieren. Diese in DE-OS 39 04 156 beschriebene Reaktion führt demnach über den B-Zustand hinaus.

Aus DE-OS 36 44 382 ist es bekannt, daß zur Erzeugung eines lagerstabilen B-Zustandes aus den Reaktionsharzgemischen a) und b) und tertiären Aminen Stopper vom Typ der Alkylierungsmittel verwendet werden müssen.

Überraschenderweise wurde nun gefunden, daß man bei dem erfindungsgemäßen Verfahren auf die Verwendung von Stoppern verzichten kann und trotzdem lagerstabile Harze der B-Stufe erhält, die zu jedem beliebigen späteren Zeitpunkt vom Verarbeiter gelöst, geschmolzen oder vermahlen werden können und gegebenenfalls nach Zusatz von Hilfs- und Zusatzmitteln zu den endgültig vernetzten Massen im C-Zustand gehärtet werden können.

Besonders vorteilhaft ist, daß in herkömmlichen Anlagen das niedrigviskose flüssige Harzgemisch mit Füllstoffen, Farbstoffen und sonstigen Additiven gemischt und nach Katalysatorzusatz in den vom Verarbeiter erwünschten lagerstabilen B-Zustand überführt werden kann.

Da die Reaktion vom flüssigen in den gelierten B-Zustand langsam und wenig exotherm verläuft, kann auch im technischen Maßstab das formulierte flüssige Harzgemisch in spezielle Gebinde abgefüllt werden, in denen das flüssige Harz zum festen B-Zustand erstarrt. Diese Art der Formulierung von z.B. Preßmassen erspart dem Anwender mehrere sonst nachträglich erfolgende Formulierungsschritte.

Bei der Komponente a) der erfindungsgemäßen Gemische handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ,

in der
n = 2-4, vorzugsweise 2,
   und
Q einen aliphatischen Kohlenwasserstoffrest mit 2-18, vorzugsweise 6-10 C-Atomen,
   einen cycloaliphatischen Kohlenwasserstoffrest mit 4-15, vorzugsweise 5-10 C-Atomen,
   einen aromatischen Kohlenwasserstoffrest mit 6-15, vorzugsweise 6-13 C-Atomen,
   oder einen araliphatischen Kohlenwasserstoffrest mit 8-15, vorzugsweise 8-13 C-Atomen,
bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonyl-isocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE- PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DT-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Bei der Komponente b) handelt es sich um beliebige, mindestens zwei Epoxidgruppen, d.h. 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylmethan, von 4,4'-Dihydroxy-3,3'-dimethyldiphenylmethan, von 4,4'-Dihydroxydiphenylmethan, 4,4'-Dihydroxydiphenylcyclohean, von 4,4'-Dihydroxy-3,3'-dimethyldiphenylpropan, von 4,4'-Dihydroxydiphenyl, aus 4,4'-Dihydroxydiphenylsulfon, von Tris-(4-hydroxyphenyl)methan, den Chlorierungs- und Bromierungsprodukten der vorstehend genannten Diphenole, von Novolacken (d.h. aus Umsetzungsprodukten von ein-oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N-Diepoxypropyl-4-aminophenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylther mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexancarboxylat.

Auch flüssige Polyepoxide oder niedrig viskose Diepoxide, wie Bis(N-epoxypropyl)anilin oder Vinylcyclohexendiepoxid können eingesetzt werden. Dies kann in besonderen Fällen die Viskosität von bereits flüssigen Polyepoxiden weiter herabsetzen oder feste Polyepoxide in flüssige Mischungen überführen.

Bei den erfindungsgemäßen nicht latenten Katalysatoren C₁ handelt es sich um tertiäre Amine wie sie in DE-OS 39 04 156 beschrieben werden.

Bei den erfindungsgemäßen latenten Katalysatoren handelt es sich um tertiäre oder quartäre Ammoniumsalze von alkylierend wirkenden sauren Estern der organischen Phosphon- bzw. der Phosphorsäure bzw. Bortrihalogenidtert.-Aminkomplexe.

Beispiele dafür sind in DE-O5 3 600 764 beschrieben. Bevorzugte latente Katalysatoren sind:

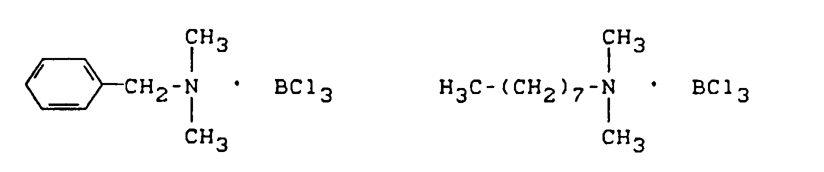

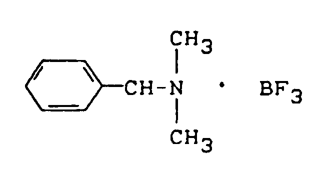

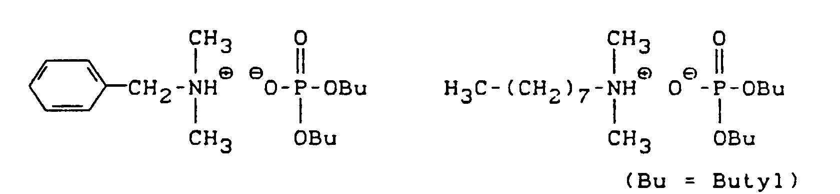

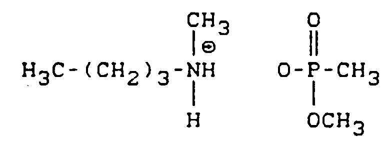

Weitere Hilfs- und Zusatzmittel d), die gegebenenfalls mitverwendet werden können sind beispielsweise Füllstoffe, Pigmente oder Weichmacher.

Geeignete Füllstoffe sind z.B. Quarzmehl, Kreide oder Aluminiumoxid, Grapit, Leitruß oder SiC.

Geeignete Pigmente sind z.B. Titandioxid, Eisenoxid oder organische Pigmente wie Phthalocyanin-Pigmente.

Geeignete Weichmacher sind z.B. Dioctylphthalat, Tributyl-oder Triphenylphosphat.

Auch die Mitverwendung von löslichen Farbstoffen oder Verstärkungsmaterialien wie z.B. von Glasfasern oder von Glasgeweben bzw. Geweben aus C- und Mineralfasern ist möglich.

### Beispiel 1

80 Gew.-Teile MDI*, 20 Gew.-Teile Bisphenol-A-di-glycidylether mit einer Epoxidzahl von 0,58 bis 0,59, 1 Gew.-Teil des Lewis-Salzes aus BCl₃ und Dimethyloctylamin und 0,5 Gew,-Teile Methyldibenzylamin werden sorgfältig gemischt. In diese Masse werden 150 Teile Quarzgutmehl eingerührt und so lange gemischt, bis sich eine homogene, gleichmäßig benetzte Masse gebildet hat. Nach 3-tägiger Lagerung in einem geschlossenen Gefäß wird die erstarrte Masse gemahlen und unter Feuchtigkeitsausschluß gelagert. Das so erhaltene Pulver wird bei einer Temperatur von 200°C und einem Druck von 15 bar/cm² zu Platten (4 mm dick) verpreßt, die anschließend noch 16 h bei 200°C getempert werden. Eine solche Platte hat einen E-Modul von 7933 (N/mm²) und einen Martensgrad von 240°C.
* MDI ist die Bezeichnung für ein niederviskoses Polyisocyanatgemisch auf Basis Diphenylmethandiisocyanat mit einem NCO-Gehalt von 33 %.

### Beispiel 2

80 Gew.-Teile MDI (siehe Beispiel 1), 20 Gew.-Teile Bis-phenol-A-diglycidylether mit einer Epoxidzahl von 0,58 bis 0,59, 1 Gew.-Teil des Lewis-Salzes aus BCl₃ und Dimethyloctylamin und 0,4 Teile Methyldibenzylamin werden sorgfältig gemischt und in einem verschlossenen Gefäß 4 Tage gereift. Die dann gelierte Masse wird zu einem Pulver vermahlen und vor Feuchtigkeit geschützt gelagert.

In einem Pulvermischer werden 35 Gew.-Teile dieses Pulvers, 20 Gew.-Teile Dolomit, 25 Gew.-Teile gemahlene Glasfasern (MF 7901 neu, Bayer AG, Leverkusen) und 20 Gew.-Teile Kurzschnittglasfaser (CS 7915, Bayer AG, Leverkusen) mit einer Länge von 3 mm sorgfältig gemischt. Diese Masse wird bei einer Temperatur von 200°C und einem Druck von 15 bar/cm² zu Platten (4 mm dick) verpreßt, die anschließend noch 16 h bei 200°C getempert werden. Danach bestimmt man eine Biegefestigkeit von 125 N/mm², einen E-Modul von 10 700 N/mm² sowie eine Schlagzähigkeit von 14 kJ/m².

### Beispiel 3

80 Gew.-Teile MDI (siehe Beispiel 1), 20 Gew.-Teile Bisphenol-A-diglycidylether mit einer Epoxidzahl von 0,58 bis 0,59, 1 Gew. -Teil des Lewis-Salzes aus BCl₃ und Dimethyloctylamin sowie 0,6 Gew. -Teile Methyldibenzylamin werden sorgfältig gemischt. In diese Mischung werden Glasgewebe mit einer Größe von 210 mm x 330 mm und einem Flächengewicht von ca. 200 g/m² getaucht, wobei sie pro Stück etwa 50 g der Mischung aufnehmen. Durch Folie getrennt werden diese Prepregs unter Ausschluß von Luftfeuchtigkeit gelagert und zun gegebenen Zeitpunkt in Lagen zu acht bei 200°C und einem Druck von ca. 5 bar/cm² verpreßt.

Bei den ca. 1,6 mm dicken Formkörpern besteht kein Unterschied in den mechanischen Eigenschaften bei Reifezeiten von 6 Tagen und 30 Tagen.

| | 6 Tage | 30 Tage |
|---|---|---|
| Biege E-Modul (N/mm² ) | 21215 | 21892 |
| Biegefestigkeit (N/mm² ) | 428 | 434 |
| Randfaserdehnung (η) | 2,4 | 2,3 |

## Patentansprüche (Patentansprüche für folgende(n) Vertragsstaat(en): BE, CH, DE, FR, GB, IT, LI, NL PT)

1. Wärmehärtbare, bei Raumtemperatur feste Reaktionsharze erhältlich aus
a) mindestens einem organischem Polyisocyanat
b) mindestens einer, mindestens zwei Epoxidgruppen aufweisenden organischen Verbindung solchen Menge, die einem Äquivalentverhältnis von Isocyanatgruppen zu Epoxidgruppen von 1, 2:1 bis 70:1 entspricht
c) einem Katalysatorgemisch aus c₁, einem nicht latenten, und c₂, einem latenten Katalysator
d) weiteren Hilfs- und Zusatzmittel
dadurch gekennzeichnet, daß der nicht latente Katalysator ein tertiäres Amin ist und es sich bei dem latenten Katalysator um tertiäre oder quartäre Ammoniumsalze von alkylierend wirkenden sauren Estern der organischen Phosphon- oder der Phosphorsäure oder Bortrichlorid-tertiär Amin-Komplexe handelt, wobei das Verhältnis von latentem Katalysator zu nicht latentem Katalysator 1:0,4 - 0,6 beträgt und der nicht latente Katalysator in einer Menge von 0.1 - 1 Gew%, bezogen auf Gesamtgewicht, eingesetzt wird.

2. Verwendung der wärmehärtbaren Reaktionsharze nach Anspruch 1 zur Herstellung von Preßformkörpern.

## Patentansprüche (Patentansprüche für folgende(n) Vertragsstaat(en): ES)

1. Verfahren zur Herstellung eines Kunststoffs durch Wärmezufuhr zu einem wärmehärtbaren Reaktionsharz enthaltend
a) mindestens ein organisches Polyisocyanat
b) mindestens eine, mindestens zwei Epoxidgruppen aufweisende organische Verbindung in einer solchen Menge, die einem Äquivalentverhältnis von Isocyanatgruppen zu Epoxidgruppen von 1,2 : 1 bis 70 : 1 entspricht
c) ein Katalysatorgemisch aus c₁, einem nicht latenten, und c₂, einem latenten Katalysator
d) weitere Hilfs- und Zusatzmittel
worin der nicht latente Katalysator ein tertiäres Amin ist und es sich bei dem latenten Katalysator um tertiäre oder quartäre Ammoniumsalze von alkylierend wirkenden sauren Estern der organischen Phosphon- oder der Phosphorsäure oder Borrrichlorid-tertiär Amin-Komplexe handelt, wobei das Verhältnis von latentem Katalysator zu nicht latentem Katalysator 1:0,4 - 0,6 beträgt und der nicht latente Katalysator in einer Menge von 0.1 - 1 Gew%, bezogen auf Gesamtgewicht eingesetzt wird, so daß die Kombination der beiden Katalysatoren c₁ und c₂ aus den flüssigen Ausgangskomponenten a) und b) ein bei Raumtemperatur festes Harz bildet, welches später durch weitere Wärmezufuhr in den endgültigen vernetzten Zustand überführt wird.

## Claims (Claims for the following Contracting State(s): BE, CH, DE, FR, GB, IT, LI, NL PT)

1. Thermosetting reaction resins, solid at room temperature, obtainable from
a) at least one organic polyisocyanate,
b) at least one organic compound having at least two epoxide groups in an amount corresponding to an equivalent ratio of isocyanate groups to epoxide groups of 1.2:1 to 70:1,
c) a catalyst mixture consisting of c₁, a non-latent, and c₂, a latent catalyst and
d) further processing aids and additives,
characterized in that the non-latent catalyst is a tertiary amine and that the latent catalyst is a tertiary or quaternary ammonium salt of an acid ester, active in alkylation, of an organic phosphonic acid or of phosphoric acid or a boron trichloride-tertiary amine complex, the ratio of latent catalyst to non-latent catalyst being 1:0.4-0.6 and the non-latent catalyst being used in a quantity of 0.1-1 wt% relative to the total weight.

2. The use of thermosetting reaction resins according to Claim 1 for the production of moulded articles.

## Claims (Claims for the following Contracting State(s): ES)

1. A process for the production of a plastic by the supply of heat to a thermosetting reaction resin containing
a) at least one organic polyisocyanate,
b) at least one organic compound having at least two epoxide groups in an amount corresponding to an equivalent ratio of isocyanate groups to epoxide groups of 1.2:1 to 70:1,
c) a catalyst mixture consisting of c₁, a non-latent, and c₂, a latent catalyst and
d) further processing aids and additives,
wherein the non-latent catalyst is a tertiary amine and the latent catalyst is a tertiary or quaternary ammonium salt of an acid ester, active in alkylation, of an organic phosphonic acid or of phosphoric acid or a boron trichloride-tertiary amine complex, the ratio of latent catalyst to non-latent catalyst being 1:0.4-0.6 and the non-latent catalyst being used in a quantity of 0.1-1 wt% relative to the total weight, so that the combination of the two catalysts c₁ and c₂ forms from the liquid starting components a) and b) a resin solid at room temperature which is later converted by further supply of heat into the final crosslinked state.

## Revendications (Revendications pour l'(les) Etat(s) contractant(s) suivant(s): BE, CH, DE, FR, GB, IT, LI, NL PT)

1. Résines réactives solides à température ambiante mais thermodurcissables, obtenues à partir de
a) au moins un polyisocyanate organique,
b) au moins un composé organique à au moins deux groupes époxydes en quantité correspondant à un rapport de 1,2 : 1 à 70 : 1 entre les équivalents de groupes isocyanates et les équivalents de groupes époxy,
c) un mélange de catalyseurs consistant en c₁ un catalyseur non latent et c₂ un catalyseur latent,
d) d'autres produits auxiliaires et additifs,
caractérisées en ce que le catalyseur non latent est une amine tertiaire et le catalyseur latent est un sel d'ammonium tertiaire ou quaternaire d'un ester acide d'acide organique phosphonique ou de l'acide phosphorique, ayant des propriétés de réactif alkylant, ou un complexe trichlorure de bore-amine tertiaire, le rapport entre le catalyseur latent et le catalyseur non latent allant de 1 : 0,4 à 0,6 et le catalyseur non latent étant mis en oeuvre en quantité de 0,1 à 1 % du poids du mélange total.

2. Utilisation des résines réactives thermodurcissables selon revendication 1 pour la fabrication d'objets moulés par compression.

## Revendications (Revendications pour l'(les) Etat(s) contractant(s) suivant(s): ES)

1. Procédé de préparation d'une résine synthétique par apport de chaleur à une résine réactive thermodurcissable contenant
a) au moins un polyisocyanate organique,
b) au moins un composé organique à au moins deux groupes époxydes, en quantité correspondant à un rapport de 1,2 : 1 à 70 : 1 entre les équivalents de groupes isocyanates et les équivalents de groupes époxydes,
c) un mélange de catalyseurs consistant en c₁ un catalyseur non latent et c₂ un catalyseur latent,
d) d'autres produits auxiliaires et additifs,
dans lequel le catalyseur non latent est une amine tertiaire et le catalyseur latent est un sel d'ammonium tertiaire ou quaternaire d'un ester acide d'un acide organique phosphonique ou de l'acide phosphorique ayant des propriétés de réactif alkylant ou un complexe trichlorure de bore-amine tertiaire, le rapport entre le catalyseur latent et le catalyseur non latent allant de 1 : 0,4 à 0,6 et le catalyseur non latent étant mis en oeuvre en quantité de 0,1 à 1 % du poids du mélange total, la combinaison des deux catalyseurs c₁ et c₂ provoquant la formation à partir des composants de départ liquides a) et b) d'une résine solide à température ambiante qui, ultérieurement, passe sous l'action d'un nouvel apport de chaleur dans l'état final réticulé.
